# EUROPÄISCHE PATENTANMELDUNG

(11) **EP 0 537 621 A2**
(43) Veröffentlichungstag der Anmeldung: **21.04.1993**
(21) Anmeldenummer: 92117172.4
(22) Anmeldetag: 08.10.1992
(51) Int. Cl.: A01F 12/40, A01D 43/08, A01D 75/28

(54) **Verteilvorrichtung**

(30) Priorität: 16.10.1991 DE 4134136
(71) Anmelder: DEERE & COMPANY, Moline, Illinois 61265 (US)
(72) Erfinder: Dannigkeit, Helmut, W-6661 Battweiler (DE)
(74) Vertreter: Feldmann, Bernhard

(57) **Zusammenfassung**

2.1. Bei bekannten Verteilvorrichtungen an Erntemaschinen sind in einem Gehäuse angeordnete Leitbleche schwenkbar angeordnet und können von einer Fahrerkabine aus über einen Motor manuell in eine gewünschte Stellung bewegt werden, die von Seitenwindverhältnissen oder von einer Hanglage abhängt. Hierzu bedarf es jedoch eines hohen Geschicks einer Bedienungsperson.

2.2. Es wird vorgeschlagen, die Neigung der Erntemaschine zur Horizontalen mittels eines Neigungssensors (38) zu erfassen und die Leitbleche (32) mittels einer motorisch bewegten Stellvorrichtung (34) über eine Rechnereinheit (40) automatisch zu verstellen.

2.3. Derartige Verteilvorrichtungen finden Anwendung bei Mähdreschern.

## Beschreibung

Die Erfindung betrifft eine Verteilvorrichtung für aus einer Erntemaschine austretendes Häckselgut, insbesondere an einem Strohhäcksler, mit einem Gehäuse, mit Leitblechen, die das Häckselgut durch das Gehäuse führen, und mit einer Stellvorrichtung, die mittels eines Motors bewegbar ist.

Bei bekannten Verteilvorrichtungen (DE-OS-38 38 936, DE-GM-80 14 119, DE-PS-35 30 195) sind in einem Gehäuse angeordnete Leitbleche schwenkbar angeordnet und können von einer Fahrerkabine aus über einen Motor manuell in eine gewünschte Stellung bewegt werden. Die Richtung, in die die Leitbleche bewegt werden, hängt ab von Seitenwindverhältnissen oder von einer Hanglage.

Diese Verteilvorrichtungen sind insofern nachteilig, als eine Bedienungsperson ein sicheres Gefühl und Zeit benötigt, die Leitbleche derart zu verstellen, daß sich das Streubild nicht mit dem ungemähten Bestand überdeckt.

Die der Erfindung zugrunde liegende Aufgabe wird darin gesehen, eine Verteilvorrichtung vorzuschlagen, deren Streubild stets außerhalb des Bestands gehalten wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bleibt es nicht dem Geschick der Bedienungsperson überlassen, die Neigung richtig zu erfassen und die Leitbleche ausreichend weit zu verstellen. Außerdem wird die Bedienungsperson beim Wenden am Hang entlastet und kann sich nunmehr der Bedienung anderer Komponenten zuwenden. Es ist ausreichend, wenn der Neigungssensor analoge Signale aussendet, die auf den Motor wirken.

Auf einfache Weise kann ein Steuer- oder Regelimpuls gewonnen werden, wenn eine sogenannte Pendelbox, die bei Hangmähdreschern regelmäßig bereits vorhanden ist, als elektrischer Meßwertgeber verwendet wird.

Eine weitere Art, die Hangneigung auf ausreichend sichere Weise zu erfassen, liegt darin, den Ausschlag einer Pendelachse der Erntemaschine zu erfassen, der sich bei einem Hangmähdrescher dadurch ergibt, daß dessen Rahmen in eine horizontale Lage geschwenkt wird, während die Achse weiterhin parallel zum Boden bleibt.

Desgleichen kann das Schwenkmaß einer Erntebergungsvorrichtung, z. B. eines Schneidwerks oder eines Pflückvorsatzes, gegenüber dem Rahmen der Erntemaschine dazu verwendet werden, ein geeignetes Signal über die Seitenneigung zu gewinnen.

Die Verwendung eines Elektromotors, insbesondere in Verbindung mit einer elektronischen Rechnereinheit, gewährleistet eine kostengünstige und schnell reagierende Verstellvorrichtung mit geringem Gewicht.

Ist die Rechnereinheit programmierbar, können die Breite der Erntebergungsvorrichtung, der Abstand der Verteilvorrichtung zum Boden, die Seitenwindgeschwindigkeit und sonstige Parameter in die Berechnung des Verstellmaßes mit einbezogen werden.

In der Zeichnung ist ein nachfolgend näher beschriebenes Ausführungsbeispiel der Erfindung dargestellt. Es zeigt:
- Fig. 1: eine Erntemaschine mit einer erfindungsgemäßen Verteilvorrichtung in Draufsicht und
- Fig. 2: einen schematischen Schaltkreis für die Verteilvorrichtung.

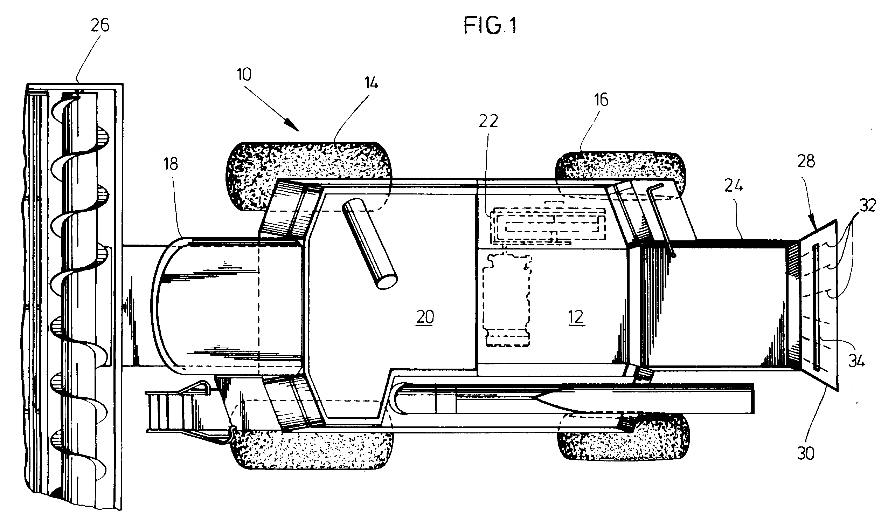

Eine in Figur 1 gezeigte Erntemaschine 10 in der Art eines selbstfahrenden Mähdreschers weist einen Rahmen 12 auf, der sich über vordere und rückwärtige Räder 14 und 16 auf dem Boden abstützt. Auf den Rahmen 12 sind an der Vorderseite der Erntemaschine 10 beginnend eine Fahrerkabine 18, ein Korntank 20, eine Antriebsmaschine 22 und ein Gehäuse 24 aufgebaut. An die Vorderseite des Gehäuses 24 ist eine Erntebergungsvorrichtung 26 angeschlossen, die auf dem Boden stehendes Erntegut aufnimmt und es einer nicht gezeigten Dresch- und Trennvorrichtung innerhalb des Gehäuses 24 zur Bearbeitung zuführt. Am rückwärtigen Ende schließt sich an das Gehäuse 24 eine Häckselvorrichtung 28 an, in der die groben Teile des aufgenommenen Guts, insbesondere das Stroh, zerkleinert und in einem Teppich auf den Boden abgelegt werden, wobei sich ein bestimmtes Streubild ergibt. Um ein breites Streubild außerhalb der Häckselvorrichtung 28 zu erzeugen, setzt sich diese aus einem Gehäuse 30 und darin schwenkbar gelagerten Leitblechen 32 zusammen, die nach der Erfindung über eine Stellvorrichtung 34 mit Bezug auf die Längsmittenachse der Erntemaschine 10 nach links oder nach rechts, d. h. hangauf oder hangab geschwenkt werden können. Geeignete Stellvorrichtungen für die Leitbleche 32 sind insbesondere aus der DE-OS-38 38 936, DE-GM-80 14 119 und DE-PS-35 30 195 hinreichend bekannt und bedürfen daher keiner näheren Beschreibung. Wesentlich ist lediglich, daß die Leitbleche 32 stromaufwärts um Lager 32' schwenkbar sind und über weitere Lager 32'' ebenfalls schwenkbar an der Stellvorrichtung 34 angreifen.

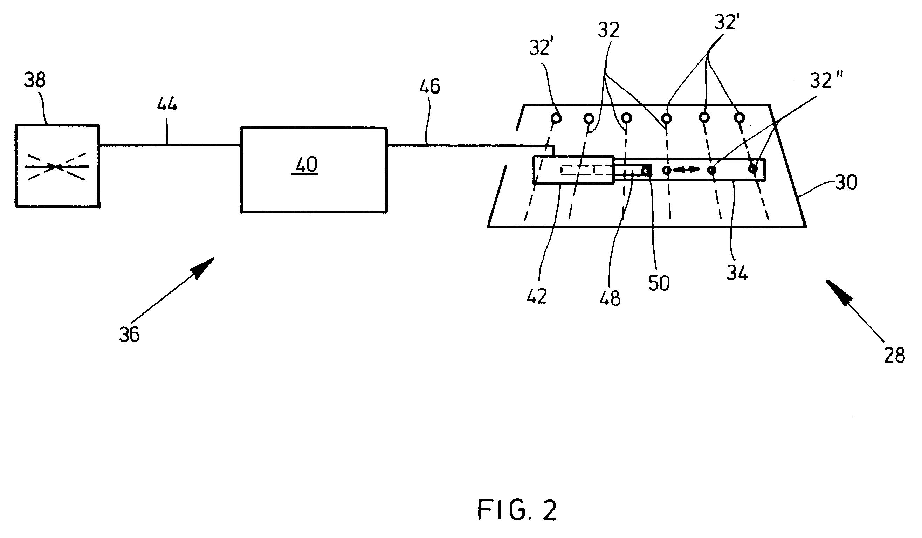

Für die weitere Beschreibung wird auf die Darstellung in Figur 2 verwiesen.

Ein in Figur 2 gezeigter Schaltkreis 36 enthält einen Neigungssensor 38, eine Rechnereinheit 40 und einen Motor 42.

Der Neigungssensor 38 kann in beliebiger Weise ausgeführt werden. Es kann sich um eine elektrisch oder elektronisch arbeitende Pendelbox oder um eine Quecksilberwaage handeln. Andernfalls kann ein analoges oder digitales Meßglied vorgesehen werden, das der Relativbewegung zwischen der Erntebergungsvorrichtung 26 oder einer Pendelachse und dem Rahmen 12 unterworfen wird und dabei einen Widerstandswert ändert, der ein Maß für die Neigung darstellt. Dieser Neigungssensor 38 ist über eine Leitung 44 mit der Rechnereinheit 40 verbunden und speist in diese der Hangneigung äquivalente Signale ein.

Die Rechnereinheit 40 ist vorzugsweise als programmierbarer Mikroprozessor ausgebildet, der aus den von dem Neigungssensor 38 empfangenen Signalen ein Ausgangssignal für den Motor 42 bildet. Vorzugsweise ist die Rechnereinheit 40 so ausgebildet, daß es mit ihr möglich ist, das Ausgangssignal auch manuell zu beeinflussen, z. B. zu verstärken oder abzuschwächen und/oder, daß auch andere Parameter wie der Seitenwind und dergleichen mitberücksichtigt werden können. Die Rechnereinheit 40 ist über eine Leitung 46 mit dem Motor 42 verbunden.

Der Motor 42 ist in diesem Fall als ein Elektromotor ausgebildet, der eine linear bewegbare Gewindespindel 48 als Ausgangsglied enthält. Allerdings könnte auch ein Hydraulik- oder ein Pneumatikmotor Verwendung finden, wobei dessen Verstellung über ein entsprechendes Elektromagnetventil eingeleitet würde.

Die Gewindespindel 48 greift mit ihrem freien Ende an der Stellvorrichtung 34 mittels eines Gelenks 50 schwenkbar an und kann die Stellvorrichtung 34 mit den Leitblechen 32 in dem Gehäuse 30 quer zu dem Strom des Häckselguts verschieben.

Nach alledem ergibt sich folgende Funktion.

Sobald der Neigungssensor 38 ermittelt, daß die Erntemaschine 10 eine Neigung quer zur Fahrtrichtung einnimmt, gibt er ein entsprechendes Signal an die Rechnereinheit 40, die anhand gespeicherter Wertepaare ein Ausgangssignal an den Motor 42 aussendet, aufgrund dessen die Stellvorrichtung 34 mit den Leitblechen 32 derart verschwenkt wird, daß das durch das Gehäuse 30 geworfene Gut entsprechend weit hangaufwärts geschleudert wird.

## Patentansprüche

1. Verteilvorrichtung für aus einer Erntemaschine (10) austretendes Häckselgut, insbesondere an einem Strohhäcksler, mit einem Gehäuse (30), mit Leitblechen (32), die das Häckselgut durch das Gehäuse (30) führen, und mit einer Stellvorrichtung (34), die mittels eines Motors (42) in Abhängigkeit von einer Neigung der Erntemaschine (10) zur Horizontalen bewegbar ist, dadurch gekennzeichnet, daß der Motor (42) automatisch mittels eines Neigungssensors (38) geregelt oder gesteuert wird.

2. Verteilvorrichtung nach Anspruch 1, dadurch gekennzeichnet, daß der Neigungssensor (38) als Pendel zur Erzeugung elektrischer Ausgangssignale ausgebildet ist.

3. Verteilvorrichtung nach Anspruch 1, dadurch gekennzeichnet, daß die Neigung mechanisch an einer Pendelachse der Erntemaschine (10) erfaßt wird.

4. Verteilvorrichtung nach Anspruch 1, dadurch gekennzeichnet, daß die Neigung an einer Relativbewegung einer Erntebergungsvorrichtung (26) gegenüber einem Rahmen (12) der Erntemaschine (10) erfaßt wird.

5. Verteilvorrichtung nach einem oder mehreren der vorherigen Ansprüche, dadurch gekennzeichnet, daß der Motor (42) als Elektromotor ausgebildet ist.

6. Verteilvorrichtung nach einem oder mehreren der vorherigen Ansprüche, dadurch gekennzeichnet, daß der Motor (42) über eine Rechnereinheit (40) bedient wird.

7. Verteilvorrichtung nach Anspruch 6, dadurch gekennzeichnet, daß die Rechnereinheit (40) programmierbar ist.
